# EUROPÄISCHE PATENTSCHRIFT

(11) **EP 1 447 271 B1**
(45) Veröffentlichungstag und Bekanntmachung des Hinweises auf die Patenterteilung: **31.08.2011**
(21) Anmeldenummer: 04001142.1
(22) Anmeldetag: 21.01.2004
(51) Int. Cl.: B60Q 1/48

(54) **Vorrichtung und Verfahren zur Überwachung des Nahbereichs eines Kraftfahrzeuges zur Vermeidung von Kollisionen mit Hindernissen, insbesondere beim Einparken**
Apparatus and method for monitoring of the proximity of a vehicle to avoid collisions with obstacles, in particular for parking
Appareil et méthode pour contrôler la proximité d'un véhicule pour éviter des collisions avec des obstacles, en particulier pour se garer

(30) Priorität: 14.02.2003 DE 10307229; 06.05.2003 DE 10321904
(43) Veröffentlichungstag der Anmeldung: 18.08.2004
(73) Patentinhaber: Valeo Schalter und Sensoren GmbH, 74321 Bietigheim-Bissingen (DE)
(72) Erfinder: Jecker, Nicolas, 73728 Esslingen (DE); Hoffsommer, Klaus, 74321 Bietigheim-Bissingen (DE)
(74) Vertreter: Pothmann, Karsten

(56) Entgegenhaltungen:
- EP-A- 0 305 907
- EP-A- 0 650 866
- DE-A1- 19 836 310
- DE-A1- 19 917 359
- US-A- 4 458 446
- US-A- 4 735 274

## Beschreibung

Die Erfindung betrifft eine Vorrichtung zur Überwachung des Nahbereichs eines Kraftfahrzeugs zur Vermeidung von Kollisionen mit Hindernissen, die beim Fahren des Kraftfahrzeuges in einer bestimmten Richtung zu Zusammenstößen führen könnten.

Derartige Systeme sind beispielsweise bekannt als Einparkhilfen, bei welchen im vorderen und hinteren Bereich des Fahrzeuges Sensoren vorgesehen sind zum Erfassen von Hindernissen beim seitliche Einparken des Fahrzeuges. Bei derartigen Einparkhilfe-Systemen wird dem Fahrer auf der Basis von Sensorwerten ein Informationssignal bereitgestellt, beispielsweise in Form eines akustischen oder optischen Signals einer Warneinrichtung. Ziel ist es hierbei, dem Fahrer ein möglichst präzises Einparken zu ermöglichen, ohne dass eine Gefahr eines Zusammenstoßes mit angrenzenden Fahrzeugen oder dergleichen besteht.

Weiter sind Einparkhilfe-Systeme im Bereich von Kraftfahrzeugen bekannt, bei denen Sensoren im Frontbereich des Fahrzeuges vorgesehen sind, sowie Sensoren zur Erfassung des Lenkwinkels einer eingeschlagenen Lenkrichtung des Kraftfahrzeuges, um beim Fahren des Fahrzeuges einen frontalen Zusammenstoß mit Objekten zu vermeiden. Ein derartiges System ist beispielsweise in der deutschen Patentanmeldung DE 199 33 732 A1 beschrieben. Nachteilig bei diesem bekannten Einparkhilfe-System ist, dass lediglich der vordere Bereich des Fahrzeuges erfasst werden kann, und dass demnach nur in bestimmten Fahrsituationen ein vollständiges Erfassen von Hindernissen ermöglicht wird. Insbesondere bei Kurvenfahrten kann ein derartiges System keine vollständige Überwachung hinsichtlich einer möglichen Kollision des Fahrzeuges mit Hindernissen bereitstellen. Außerdem weist das bekannte Einparkhilfe-System den Nachteil auf, dass Hindernisse oder Objekte schnell aus einem Detektionsfeld der Sensoren beim Fahren des Kraftfahrzeugs herausfallen und somit nicht mehr detektierbar sind. Der Fahrer ist in diesem Fall vollständig auf seine eigene Wahrnehmung angewiesen, was insbesondere im Bereich eines toten Winkels des Fahrzeuges zu unzuverlässigen Ergebnissen führt und zu Kollisionen mit Objekten führen kann. Ein Außenspiegel eines Kraftfahrzeuges weist bekanntermaßen einen begrenzten Erfassungswinkel auf, wobei zwischen dem Innenspiegel des Kraftfahrzeuges und dem Außenspiegel ein sogenannter "toter Winkel" bestehen bleibt, welcher durch den Fahrer des Kraftfahrzeuges nicht erfasst werden kann. Wenn in diesem Bereich Objekte oder Hindernisse auftreten, werden diese regelmäßig übersehen.

Aus der DE 199 17 359 A1 und der EP 0 305 907 A1 ist eine Vorrichtung zur Erkennung von seitlich zur Fahrtrichtung verlaufenden Hindernissen für ein Kraftfahrzeug gemäß dem Oberbegriff des Anspruchs 1 bekannt geworden. Aus der EP 0 650 866 A2 ist ein Verfahren und eine Vorrichtung zum Ausparken eines Fahrzeugs bekannt geworden.

Demgegenüber ist es die Aufgabe der vorliegenden Erfindung, eine Vorrichtung zur Überwachung des Nahbereichs eines Kraftfahrzeugs zur Vermeidung von Kollisionen mit Hindernissen vorzuschlagen, welche eine größere Sicherheit im Detektieren von Hindernissen beim Fahren des Fahrzeuges bereitstellen und zuverlässig den Fahrer des Fahrzeuges in jeder kritischen Situation warnen bzw. Gegenmaßnahmen hervorrufen.

Diese Aufgabe wird mit einer Vorrichtung mit den Merkmalen gemäß Anspruch 1 gelöst. Vorteilhafte Ausgestaltungen und Weiterbildungen sind Gegenstand der abhängigen Ansprüche.

Die Vorrichtung zur Überwachung des Nahbereichs eines Kraftfahrzeugs gemäß der vorliegenden Erfindung weist mindestens einen Entfernungssensor, einen Lenkwinkelsensor sowie eine Rechnereinheit zur Verarbeitung von Sensorwerten und weiterer Daten auf und ist dadurch gekennzeichnet, dass ein Wegsensor zur Erfassung einer zurückgelegten Wegstrecke am Fahrzeug vorgesehen ist und dass der mindestens eine Entfernungssensor im Bereich einer Seitenflanke des Fahrzeugs zur Überwachung von seitlichen Hindernissen vorgesehen ist. Auf diese Weise können Hindernisse im Seitenbereich eines Fahrzeuges in Abhängigkeit von der Fahrbewegung des Fahrzeuges überwacht werden und bei Vorliegen einer Gefahr einer Kollision entsprechende Maßnahmen ergriffen werden. Die Vorrichtung ermöglicht somit auch eine Überwachung von Hindernissen, welche erst im Verlaufe einer Kurvenfahrt in einem vom Fahrer nicht einsehbaren Bereich zu einer Kollision führen würden. Beispielsweise kann so auch ein "toter Winkel"-Bereich des Fahrzeuges hinsichtlich der Gefahr einer Kollision mit Hindernissen überwacht werden. Da ein Lenkwinkelsensor, eine Rechnereinheit und ein Wegsensor vorgesehen sind, kann die Fahrtbewegung im Verhältnis zu einem im Seitenbereich einmal erfassten Hindernis permanent weiterverfolgt und überwacht werden, auch wenn sich dieses Hindernis in einem hinteren Seitenbereich des Fahrzeuges befindet, der über einen Außenspiegel des Fahrzeuges vom Fahrer nicht eingesehen werden kann (sogenannter "toter Winkel"). Damit können nicht nur im Front- oder Heckbereich des Fahrzeuges auftauchende Hindernisse erfasst werden, sondern die Vorrichtung ermöglicht vorteilhafterweise eine vollständige Überwachung des Außenbereichs des Fahrzeuges im Hinblick auf ein einmal mittels des Entfernungssensors erfassten Objekts oder Hindernisses.

Ferner ist eine Warneinrichtung vorgesehen, mittels welcher ein akustisches und/oder optisches Warnsignal bei Vorliegen einer Kollisionsgefahr erzeugbar ist. Ein Fahrer des Fahrzeuges wird hierdurch frühzeitig gewarnt, zum Beispiel durch einen akustischen, gegebenenfalls auch abgestuften Warnton oder eine optische Leuchtanzeige, beispielsweise im Instrumentenbereich des Fahrzeugs. Die Erzeugung eines Warnsignals kann dabei je nach Höhe der vorliegenden Gefahr durch eine unterschiedliche Warnung erfolgen, beispielsweise durch einen zeitlichen Abstand zwischen erzeugten Warntönen. Die Erzeugung von Warnsignalen durch die Warneinrichtung kann vorteilhafterweise ab einem Unterschreiten eines Mindestabstandes des Fahrzeuges zu einem erfassten Hindernis oder Objekt erfolgen.

Die Rechnereinheit ist ausgebildet, zu ermitteln, inwieweit mindestens eine Türe des Kraftfahrzeugs unter Berücksichtigung der Position des Kraftfahrzeugs zu einem der Türe benachbarten Hindernis im Seitenbereich des Kraftfahrzeugs geöffnet werden kann, ohne dass es zu einer Kollision der Türe mit dem Hindernis kommt. Für Personen in dem Kraftfahrzeug, die im Begriff sind, durch die Türe des Kraftfahrzeugs auszusteigen, ist es von Vorteil, wenn sie eine Information darüber erhalten, inwieweit die Türe geöffnet werden kann, ohne dass es zu einer Kollision der Türe mit dem Hindernis kommt. Auf diese Weise können Beschädigungen an der Türe selbst oder an dem Hindernis, bei dem es sich zum Beispiel um ein parkendes Fahrzeug handeln kann, vermieden werden.

Nach einer vorteilhaften Ausgestaltung der Erfindung ist eine Speichereinheit zur Speicherung von Positionsdaten eines im Nahbereich des Kraftfahrzeugs erfassten Hindernisses vorgesehen, um auch nach Verlassen des Sensorbereiches des Entfernungssensors eine mögliche Kollision an der Seitenflanke des Fahrzeuges zu erfassen und verhindern zu können. Die Speicherung von positionsbezogenen Daten hinsichtlich eines einmal durch einen Entfernungssensor erfassten Hindernisses ermöglicht die fortlaufende Überwachung eines Abstandes zu dem Hindernis im Verlaufe des Fahrens des Fahrzeuges entsprechend einer eingeschlagenen Fahrtrichtung, beispielsweise bei einer Kurvenfahrt um das Hindernis herum. Es ist demnach nicht erforderlich, an der Seite des Fahrzeuges flächendeckend Entfernungssensoren vorzusehen, da die einmal erfasste Position eines Hindernisses gespeichert wird. Die Wirksamkeit der Kollisionsüberwachung ist verbessert. Auch Kollisionen mit Hindernissen, welche erst im Verlaufe des Fahrens zu einem Problem im hinteren Seitenbereich des Fahrzeuges werden können, sind mittels der Vorrichtung ebenso erfassbar.

Nach einer weiteren vorteilhaften Ausgestaltung der Erfindung ist die Rechnereinheit angepasst zur fortlaufenden Ermittlung einer Kollisionsgefahr auf der Basis von Entfernungs-, Lenkwinkel- und Weginformationen. Hierdurch kann eine kontinuierliche Überwachung von Kollisionsgefahren bereitgestellt werden. Es tritt keine Fahrsituation auf, in der vom Fahrer übersehene Hindernisse nicht von der erfindungsgemäßen Vorrichtung detektiert werden.

Nach einer weiteren vorteilhaften Ausgestaltung der Erfindung ist die Rechnereinheit ausgebildet, eine aktuelle Position des Kraftfahrzeugs in Bezug auf das mindestens eine Hindernis, insbesondere im Seitenbereich des Kraftfahrzeugs, vorzugsweise in Echtzeit, zu ermitteln. Für den Fahrer des Kraftfahrzeugs ist es vorteilhaft, wenn ihm, insbesondere während eines Einparkvorganges, diese Position seines Kraftfahrzeugs relativ zu den benachbarten Hindernissen bekannt gemacht, insbesondere visualisiert wird. Er erhält auf diese Weise eine komfortable Einparkhilfe.

Weiterhin ist es vorteilhaft, wenn eine Sicherheitseinrichtung vorgesehen ist, zum Begrenzen des Öffnungswinkels oder zum Sperren der Türe des Kraftfahrzeugs nach Maßgabe durch die von der Rechnereinheit berechnete Gefahr einer Kollision der Türe mit dem Hindernis in ihrer Nachbarschaft. Auf diese Weise können Beschädigungen an der Türe selbst oder an dem Hindernis in ihrer Nachbarschaft automatisch verhindert werden. Der Fahrer oder ein Mitfahrer des Kraftfahrzeugs wird durch die Sicherheitseinrichtung beim Aussteigen aus dem Kraftfahrzeug insofern entlastet, als dass er beim Öffnen der Türe des Kraftfahrzeugs keine besondere Vorsicht walten lassen muss. Er kann die Türe auch unüberlegt, ohne Rücksicht auf das eventuelle Vorhandensein von dem Hindernis, öffnen; allerdings nur soweit es von der Sicherheitseinrichtung zugelassen wird. Nach einer weiteren vorteilhaften Ausgestaltung der Erfindung ist ein Aktuator vorgesehen zur automatischen Veränderung eines Lenkeinschlags oder zum automatischen Abbremsen des Kraftfahrzeuges bei Erfassen eines Hindernisses, mit welchem eine Kollision droht. Auf diese Weise kann automatisch die Fahrtbewegung des Fahrzeuges korrigiert werden, wenn ein Hindernis in einem kritischen Bereich bezüglich der Fahrtrichtung erfasst worden ist. Die automatisch induzierte Gegenmaßnahme mittels des Aktuators kann entweder in einem Abbremsen des Fahrzeuges in Abhängigkeit von dem Abstand zu dem Hindernis bestehen und/oder alternativ hierzu in einer Veränderung der eingeschlagenen Richtung des Fahrzeuges, das heißt in einem Verändern des Lenkeinschlags. Die automatische Einflussnahme mittels des Aktuators zur Vermeidung einer Kollision mit dem Hindernis kann mit oder ohne gleichzeitigen Warnhinweis an den Fahrer erfolgen, zum Beispiel durch akustische oder optische Warninformationen.

Nach einer weiteren vorteilhaften Ausgestaltung der Erfindung sind in der Rechnereinheit gespeicherte Informationen hinsichtlich der jeweiligen Außenkontur und weiterer Charakteristika des jeweiligen Kraftfahrzeugs vorgesehen. Auf der Grundlage von diesen gespeicherten Karosserieabmessungen, einem Radabstand, einem Achsabstand, der Außengeometrie oder dergleichen, kann in Kombination mit den Werten des Entfernungssensors, Wegsensors und Lenkwinkelsensors ein einmal erfasstes Hindernis oder Objekt im Nahbereich des Fahrzeuges fortlaufend weiter überwacht werden, auch wenn sich dieses nicht mehr im direkten Erfassungsbereich des Entfernungssensors befindet.

Für den Fall, dass das Fahrzeug einen Anhänger ziehen soll, ist denkbar, dass in der Rechnereinheit die Außenkonturen und weitere Charakteristika verschiedener Anhängertypen abgelegt sind. Damit lässt sich auch der vom Fahrzeug gezogene Anhänger auf Kollision überwachen. Erfindungsgemäß kann auch vorgesehen sein, dass der Anhänger eine eigene Speicher- und/oder Rechnereinheit aufweist, in der die Außenkontur und weitere Charakteristika des jeweiligen Anhängers gespeichert sind. Beim Anhängen des Anhängers an das Fahrzeug werden die anhängerspezifischen Daten der Rechnereinheit des Fahrzeugs mitgeteilt.

Nach einer weiteren vorteilhaften Ausgestaltung der Erfindung ist die Rechnereinheit angepasst zur Berechnung einer Trajektorie des Kraftfahrzeugs in Abhängigkeit von dem erfassten Lenkwinkel und weiterer karosseriebezogener Informationen. Letztere sind beispielsweise die Breite und/oder Länge der Karosserie, die Achsbreite, der Radabstand und die Länge des hinteren Überhangs. Durch Berechnen eine Trajektorie bzw. eines Fahrschlauchs, welche das Fahrzeug bei einem gewählten Lenkwinkeleinschlag fahren wird, können so die Abstände des Fahrzeuges zu Hindernissen genauestens bestimmt werden. Eine Kollision wird in jeder Situation sicher vermieden.

Nach einer weiteren vorteilhaften Ausgestaltung der Erfindung ist die Warneinrichtung als optisches Display ausgebildet zum Anzeigen einer Position, insbesondere einer Einparkposition des Kraftfahrzeugs in Bezug auf das mindestens eine Hindernis im seitlichen Bereich des Kraftfahrzeugs. Wie bereits oben erwähnt, kann eine derartige Anzeige eine wesentliche Hilfe für den Fahrer des Kraftfahrzeugs beim Einparken des Kraftfahrzeugs bedeuten.

Weiterhin ist es vorteilhaft, wenn die Warneinrichtung ausgebildet ist, vorzugsweise in Form unterschiedlicher Symbole anzuzeigen, welche der Türen des Kraftfahrzeugs in Anbetracht einer zu geringen Entfernung der Türen zu dem Hindernis im seitlichen Bereich des Kraftfahrzeugs nicht geöffnet werden dürfen und/oder welche der Türen des Kraftfahrzeugs in Anbetracht einer ausreichenden Entfernung zu dem seitlichen Hindernis vorzugsweise wie weit geöffnet werden dürfen. Wie ebenfalls bereits oben erwähnt, kann ein derartiger Warnhinweis den Fahrer oder die Mitfahrer des Fahrzeugs zu erhöhter Vorsicht beim Öffnen der Türen des Kraftfahrzeugs ermahnen und auf diese Weise Beschädigungen an der Türe selber oder an dem Hindernis vermeiden.

Eine besonders vorteilhafte Ausgestaltung der Erfindung ist darin zu sehen, dass die Warneinrichtung eine zumindest einzelnen Türen des Kraftfahrzeugs individuell zugeordnete Leuchtanzeige, vorzugsweise ein Blinklicht aufweist, welche ausgebildet ist, Licht in unterschiedlichen Farben auszusenden, um auf diese Weise anzuzeigen, inwieweit die jeweilige Türe in Anbetracht der Kollisionsgefahr mit dem Hindernis in seiner Nachbarschaft geöffnet werden darf. Eine derartige Leuchtanzeige befindet sich vorzugsweise an jeder Türe des Fahrzeugs; auf diese Weise wird die Wahrscheinlichkeit wesentlich erhöht, dass der Fahrer oder Mitfahrer die durch das Licht repräsentierte Information auch beachtet.

Ein Verfahren zur Überwachung des Nahbereichs eines Kraftfahrzeuges zur Vermeidung einer Kollision mit Hindernissen kann folgende Schritte umfassen:
a. Erfassen der Entfernung zu einem Hindernis mittels mindestens eines Entfernungssensors, welcher im Bereich einer Seitenflanke des Fahrzeugs vorgesehen ist;
b. Erfassen eines Lenkwinkels des Fahrzeuges;
c. fortlaufendes Erfassen einer zurückgelegten Wegstrecke des Kraftfahrzeugs; und
d. Berechnen einer Gefahr einer Kollision des Kraftfahrzeugs mit einem Hindernis im Seitenbereich auf Grundlage der Sensorwerte, die in den Schritten a. bis c. ermittelt wurden.

Durch das permanente Erfassen von potentiellen Hindernissen im Bereich einer Seitenflanke des Fahrzeuges kann jedes Hindernis beim Vorbeifahren sicher detektiert werden, sodass auch im weiteren Verlauf eines Fahrweges eine Kollision jederzeit effektiv vermieden werden kann. Die Lenkwinkel- und Wegstreckendetektierung ermöglicht ein sehr genaues Berechnen eines Abstandes von dem Fahrzeug zu einem Hindernis auch bei Veränderung eines Lenkwinkeleinschlages und auch nachdem ein Hindernis von dem Sensorbereich bzw. Erfassungskegel nicht mehr erfasst wird. Es können daher insbesondere auch Zusammenstöße mit Objekten im seitlichen hinteren Bereich eines Fahrzeuges effektiv vermieden werden. Ein Fahrer muss sich nicht auf seine Einschätzung alleine verlassen, ob in einer Kurvenfahrt beispielsweise ein ausreichender Abstand immer gegeben sein wird. Das Verfahren ermöglicht eine permanente und auch nachfassende Kollisionsüberwachung und -vermeidung.

Nach einer vorteilhaften Ausgestaltung wird die Position des Kraftfahrzeugs im Verhältnis zur Position eines zuletzt erfassten Objektes oder Hindernisses berechnet, auch nachdem dieses einen Detektionsbereich des Entfernungssensors verlassen hat. Hierdurch ist es nicht erforderlich, am gesamten Außenumfang eines Fahrzeuges in engen Abständen Sensoren vorzusehen. Das Verfahren ermöglicht ein Berechnen der Gefahr einer Kollision aufgrund eines zuletzt ermittelten Abstands zu dem Objekt, ohne dass es erforderlich wäre, dieses weiter permanent zu überwachen. Ein Art indirekte Kollisionsvermeidung wird bereitgestellt. Die Implementierung des Verfahrens ist denkbar einfach und somit kostengünstig. Beispielsweise kann das Verfahren in einem bestehenden Einparkhilfe-System implementiert werden durch Programmmodule oder entsprechende Zusatzeinrichtungen.

Nach einer weiteren vorteilhaften Ausgestaltung des Verfahrens wird die Trajektorie des Fahrzeuges in Echtzeit berechnet, und es wird eine Kollisionsgefahr mit einem einmal erfassten Hindernis überwacht. Unter Trajektorie wird vorliegend ein eingeschlagener Fahrtrichtungsweg oder -schlauch verstanden. Die Berechnung der Trajektorie kann vorteilhafterweise auf Basis des erfassten Lenkwinkels und fahrzeugbezogener Karosserieabmessungen erfolgen. Somit kann eine Art vorausschauende Wegberechnung erfolgen, die zusammen mit dem Erfassen einer Entfernung zu jedem möglicherweise auftauchenden Hindernis zu einer vollständigen und effizienten Überwachung des Nahbereichs eines Kraftfahrzeuges führt. Mit dem Verfahren kann auf unterschiedliche Fahrsituationen eingegangen werden und dennoch eine permanente und unmittelbare Überwachung des Nahbereichs erfolgen.

Nach einer weiteren vorteilhaften Ausgestaltung des Verfahrens wird das Kraftfahrzeug in Abhängigkeit von der Entfernung zu einem erfassten Hindernis bei Vorliegen einer Kollisionsgefahr automatisch abgebremst. Beispielsweise kann so das Fahrzeug bei Unterschreiten eines voreingestellten Mindestabstandes zu einem erfassten Hindernis oder Objekt daran gehindert werden, mit diesem zu kollidieren. Die Abbremsung kann vorteilhafterweise kontinuierlich ansteigen, das heißt, zunächst wird leicht abgebremst, und bei weiter abnehmendem Abstand zu dem Hindernis wird zunehmend stark automatisch die Bremse des Fahrzeuges betätigt. Nach einem diesbezüglichen alternativen Aspekt wird bei Erfassen eines Hindernisses und Feststellen einer Kollisionsgefahr mit dem Hindernis Einfluss auf die Lenkung des Fahrzeuges genommen. Beispielsweise wird in eine entgegengesetzte Richtung gegengelenkt, so lange, bis die berechnete Fahrbahn des Fahrzeuges unter Zugrundelegung der jeweiligen spezifischen Außenabmessungen eines Fahrzeuges zu dem Ergebnis kommen, dass eine Kollisionsgefahr nicht mehr vorliegt. Ein Gegenlenken und Abbremsen kann selbstverständlich ebenfalls kombiniert erfolgen.

Weitere Vorteile und Merkmale der Erfindung sind der nachfolgenden Beschreibung zu entnehmen, in welcher.die Erfindung anhand des in der beigefügten Zeichnung dargestellten Ausführungsbeispiels näher beschrieben und erläutert ist.

In der Zeichnung zeigen:
- Fig. 1a bis 1c: verschiedene Fahrsituationen eines Fahrzeuges zur Veranschaulichung der Funktionsweise einer er- findungsgemäßen Kollisionsüberwachungs-Vorrichtung in jeweiligen Draufsichten;
- Fig. 2a: eine erste Einparkposition des Kraftfahrzeugs in einer Parklücke;
- Fig. 2b: die Visualisierung der ersten Einparkposition für den Fahrer auf einem optischen Display;
- Fig. 3a: eine zweite Einparkposition des Kraftfahrzeugs in einer Parklücke;
- Fig. 3b: die Visualisierung der zweiten Einparkposition für den Fahrer des Kraftfahrzeugs auf einem optischen Display; und
- Fig. 4: eine schematische Draufsicht auf ein Fahrzeug mit einem Ausführungsbeispiel einer Vorrichtung zur Kollisionsüberwachung gemäß der vorliegenden Er- findung.

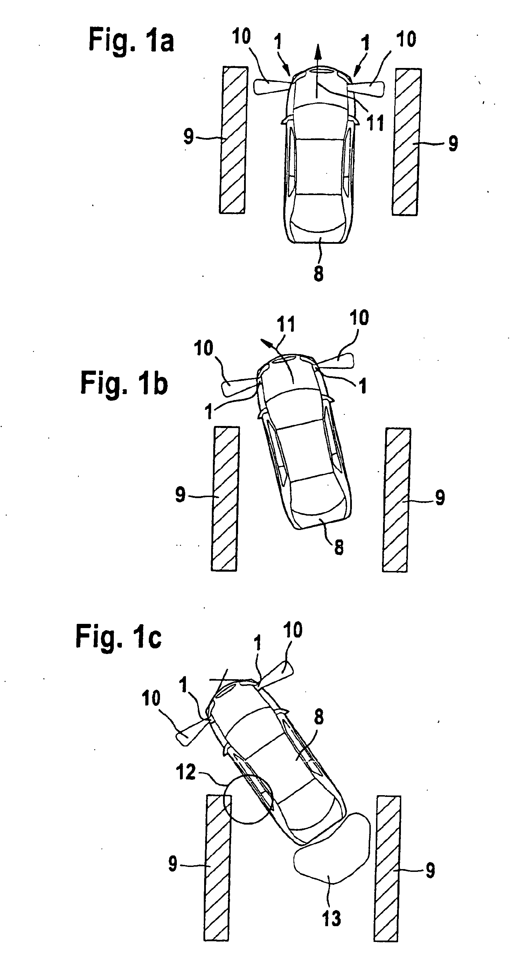

Die Fig. 1a bis 1c stellen verschiedene Fahrsituationen eines Fahrzeugs 8 im Verhältnis zu einem Hindernis 9 dar zur Erläuterung der Funktionsweise einer Überwachungsvorrichtung gemäß der vorliegenden Erfindung. In Fig. 1a ist ein Kraftfahrzeug 8 zwischen zwei seitlichen Hindernissen 9 in einer Geradeausfahrt in Fahrtrichtung 11 wiedergegeben. Das Hindernis 9 ist beispielsweise eine Ausfahrt einer Tiefgarage. Im vorderen Bereich des KfZ 8 sind seitlich jeweils Entfernungssensoren 1 vorgesehen, welche je einen seitlichen Detektionsbereich 10 aufweisen, sodass sie die Entfernung zwischen dem Fahrzeug und den seitlichen Hindernissen 9, zum Beispiel eine Mauer einer Tiefgaragenausfahrt, erfassen können. Die Sensorinformation der Entfernungssensoren 1 dient einer Überwachung des Seitenbereichs des fahrenden Fahrzeuges, wie weiter unten beschrieben werden wird. Wenn das Fahrzeug nun im weiteren Fahrverlauf in eine Kurve gelenkt wird (vgl. Fahrtrichtung 11 in Fig. 1b), besteht die Gefahr, dass das Kraftfahrzeug 8 unbeabsichtigt mit dem Hindernis 9 zusammenstößt, wenn beispielsweise der Lenkeinschlag zu stark vom Fahrer ausgewählt wird. Dies ist insbesondere im Bereich des sogenannten "toten Winkels" des Fahrzeuges, in welchem der Fahrer im Rückspiegel Hindernisse nicht erkennen kann, der Fall. Die Detektionsbereiche 10 der Entfernungssensoren 1 im vorderen Bereich des Fahrzeuges können bei herkömmlichen Einpark-/Ausparksystemen Hindernisse in einem solchen Bereich nicht erkennen. Es ist jedoch eine Rechnereinheit vorgesehen, in welcher Lenkwinkelinformationen, Weginformationen und Entfernungsinformationen der Entfernungssensoren 1 derart verarbeitbar sind, dass auch eine solche Kollision effektiv vermieden werden kann. Dies veranschaulicht Fig. 1c. Das Fahrzeug 8 ist hier beim Herausfahren zwischen den beiden seitlichen Hindernissen 9 so stark nach links gelenkt worden, dass ein kritischer Mindestabstand 12 erreicht bzw. unterschritten wird. Obwohl die seitlichen Entfernungssensoren 1 dies nicht mehr erfassen können, da es erst im hinteren seitlichen Bereich des Kraftfahrzeugs 8 zu einer Kollision kommen würde, wird dieser kritische Zustand erkannt, indem mittels einer Rechnereinheit die zuletzt erfasste Position des Hindernisses 9 verwendet wird sowie Lenkwinkelinformationen und Weginformationen der Sensoren des Fahrzeuges 8. Mit der Vorrichtung zur Überwachung des Nahbereichs zur Vermeidung einer Kollision kann daher mit lediglich zwei seitlichen Entfernungssensoren 1 im vorderen Bereich des Fahrzeuges 8 eine vollständige Sicherheit in der Überwachung gegeben werden. Das Fahrzeug 8 kann beispielsweise durch eine entsprechende Steuereinrichtung (nicht dargestellt) automatisch abgebremst werden bei Erreichen eines voreingestellten kritischen Mindestabstands 12 zwischen dem Fahrzeug 8 und dem Hindernis 9. Mit dem Bezugszeichen 13 ist ein Detektionsbereich von herkömmlichen Sensoren eines Einparkhilfe-Systems gekennzeichnet, welche regelmäßig lediglich den Front- und/oder Heckbereich eines Fahrzeugs 8 abdecken, sodass ein seitlicher Zusammenstoß des Fahrzeuges mit Hindernissen nicht vermieden werden kann. Die Vorrichtung zur Überwachung des Nahbereichs kann ergänzend zu einem herkömmlichen Einparkhilfe-System mit einem solchen Detektionsbereich 13 implementiert werden. Selbstverständlich kann die Vorrichtung auch ohne eine konventionelle Einparkhilfe lediglich zur seitlichen Überwachung des Fahrzeuges eingesetzt werden.

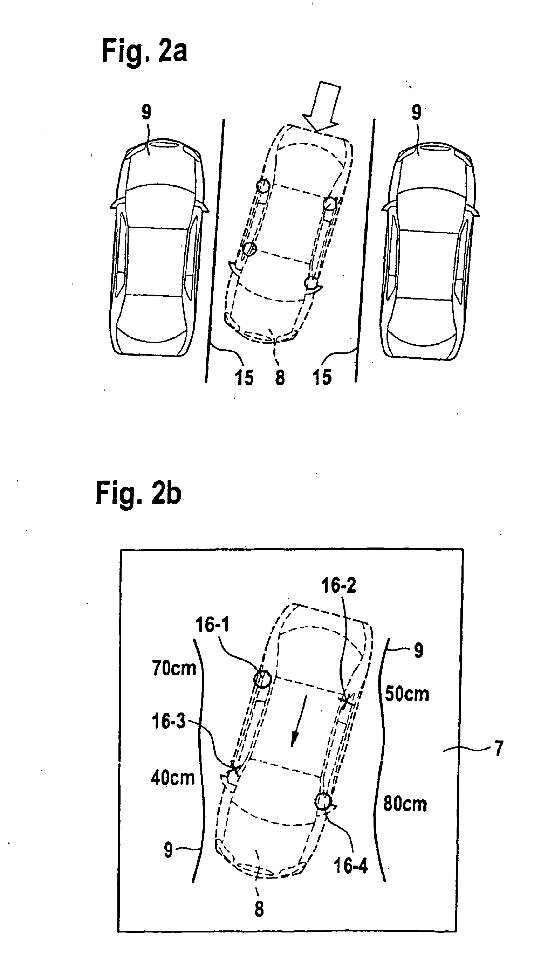

Fig. 2a zeigt ein Beispiel für eine erste Einparkposition des Kraftfahrzeugs 8 in einer Parklücke. Die Parklücke ist durch die beiden linienförmigen Fahrbahnmarkierungen 15 definiert und begrenzt. Diese Fahrbahnmarkierungen 15 stellen als solche jedoch kein Hindernis für das Kraftfahrzeug 8 dar. Hindernisse 9 stellen jedoch die in den benachbarten Parklücken parkenden Fahrzeuge dar. Die benachbart parkenden Fahrzeuge begrenzen insbesondere den Winkel, mit dem einzelne Türen des Kraftfahrzeugs 8 in der gezeigten ersten Einparkposition geöffnet werden können, ohne dass es zu einer Kollision der Türen mit den parkenden Fahrzeugen und damit zu eventuellen Beschädigungen von sowohl an den Türen selbst wie auch an den parkenden Fahrzeuge kommt.

In dieser Situation ist es hilfreich, wenn die Rechnereinheit 3 die gezeigte erste Einparkposition erfasst und die entsprechenden Daten zum Zwecke einer Visualisierung durch den Fahrer des Kraftfahrzeugs 8 aufbereitet.

Fig. 2b zeigt ein Beispiel, wie die in Fig. 2a gezeigte erste Einparkposition für den Fahrer des Kraftfahrzeugs mit Hilfe einer Warneinrichtung 7, die vorzugsweise als optisches Display, vorzugsweise in der Mittelkonsole des Kraftfahrzeugs 8 ausgebildet ist, veranschaulicht werden kann. Auf dem Display werden vorteilhafterweise sowohl die Kontur des eigenen Fahrzeugs 8, wie auch die Konturen der benachbart parkenden Fahrzeuge 9 gezeigt. Auf diese Weise erhält der Fahrer einen anschaulichen Überblick über die Position seines Fahrzeugs 8 relativ zu dessen Umgebung, die insbesondere durch die benachbart parkenden Fahrzeuge 9 gebildet wird. Konkret bezogen auf die gezeigte erste Einparkposition erkennt der Fahrer, dass sein Fahrzeug schräg zu den benachbarten Fahrzeugen 9 steht. Dies erkennt der Fahrer zum Einen aufgrund der gezeigten Konturen seines eigenen Fahrzeugs und der benachbarten Fahrzeuge sowie zum Anderen auch aufgrund der optional angezeigten Abstände zwischen verschiedenen Punkten in den Seitenbereichen seines Fahrzeugs 8 zu den benachbart parkenden Fahrzeugen 9. In Fig. 2b ist beispielsweise zu erkennen, dass der Abstand der - in Pfeilrichtung gesehen - hinteren rechten Tür des Fahrzeugs 8 zu dem dieser Tür benachbart parkenden Fahrzeug 9 70 cm und der Abstand zwischen der - in Pfeilrichtung gesehen - hinteren linken Türe zu dem ihr benachbart parkenden Fahrzeug 9 lediglich 50 cm beträgt. In etwa umgekehrt ist die Situation für die Vordertüren des Fahrzeugs 8. Hier beträgt aufgrund der schrägen ersten Einparkposition der Abstand der - in Pfeilrichtung gesehen - vorderen rechten Türe zu dem zu dieser Türe benachbart parkenden Fahrzeug 9 40 cm, während er zwischen der - in Pfeilrichtung gesehen - vorderen linken Türe und dem zu dieser Tür benachbarten Fahrzeug 9 80 cm beträgt. Sowohl die Konturen wie auch die angegebenen Entfernungen zu den benachbart parkenden Fahrzeugen werden von der Rechnereinheit 3 unter Berücksichtigung von Entfernungsinformationen der Entfernungssensoren 1, von Lenkwinkelinformationen und von Weginformationen, die jeweils während des Einparkvorganges des Fahrzeugs 8 aufgezeichnet wurden, berechnet und bereitgestellt. Mit Hilfe der in der Fig. 2b gezeigten Visualisierung der aktuellen ersten Einparkposition erhält der Fahrer eine sehr große Hilfe, um seine aktuelle Einparkposition zu korrigieren und sein Fahrzeug 8 symmetrisch zu den beiden benachbarten Fahrzeugen 9 auszurichten.

Neben der beschriebenen aktuellen ersten Einparkposition kann die Warneinrichtung 7 jedoch auch dazu verwendet werden, um den Fahrer oder die Fahrgäste des Fahrzeugs 8 über die Möglichkeiten zu informieren, inwieweit einzelne Türen des Fahrzeugs 8 in Anbetracht der jeweiligen räumlichen Nähe der Türen zu den jeweils benachbarten Hindernissen, insbesondere zu den parkenden Fahrzeugen, geöffnet werden können.

Bei der in Fig. 2b gezeigten ersten schrägen Einparkposition würde die Rechnereinheit 3 erkennen, dass aufgrund der berechneten und oben erwähnten Abstände der Türen zu ihren jeweils benachbarten Hindernissen nur ein Öffnen der vorderen linken und hinteren rechten Türe möglich bzw. sinnvoll wäre. Aufgrund des zu geringen Abstandes zu den benachbart parkenden Fahrzeugen 9 wäre ein Öffnen der vorderen rechten und hinteren linken Türe nicht möglich bzw. nicht zu empfehlen.

Wenn die Rechnereinheit 3 eine derartige Situation erkennt, ist es vorteilhaft, wenn dies dem Fahrer und den Fahrgästen des Fahrzeugs 9 mitgeteilt wird. Die Mitteilung kann zum Beispiel in der Weise erfolgen, dass die Türen, die nicht geöffnet werden sollen, in dem optischen Display mit einem besonderen Symbol 16-2, 16-3, zum Beispiel einem Kreuz, gekennzeichnet werden. Für die Kennzeichnung der Türen, die bei der aktuellen Einparkposition problemlos geöffnet werden können, empfiehlt sich ein anderes Symbol 16-1, 16-4, zum Beispiel ein dicker Punkt. Alternativ oder ergänzend zu der beschriebenen Darstellung der Möglichkeiten der Türöffnung in dem optischen Display kann vorzugsweise jeder Türe des Kraftfahrzeugs individuell eine Leuchtanzeige, vorzugsweise in Form eines Blinklichtes, zugeordnet sein, die ebenfalls auf die Möglichkeiten der Türöffnung hinweist. Diese Leuchtanzeigen können zum Beispiel Licht in unterschiedlichen Farben aussenden, um auf diese Weise anzuzeigen, inwieweit die jeweilige Türe in Anbetracht der Kollisionsgefahr mit dem Hindernis 9 geöffnet werden darf. Konkret empfiehlt es sich beispielsweise, dass die Leuchtanzeige ein rotes Licht aussendet, wenn die jeweilige Türe nicht geöffnet werden darf, ein oranges Licht auszusenden, wenn die jeweilige Türe nur unter besonderer Vorsicht im Hinblick auf das benachbarte Hindernis 9 geöffnet werden darf, und ein grünes Licht auszusenden, wenn die Türe gefahrlos geöffnet werden darf.

Diese Leuchtanzeigen sind vorzugsweise in Form von Leuchtdioden realisiert, zumal die Leuchtdioden in den genannten Farben verfügbar sind.

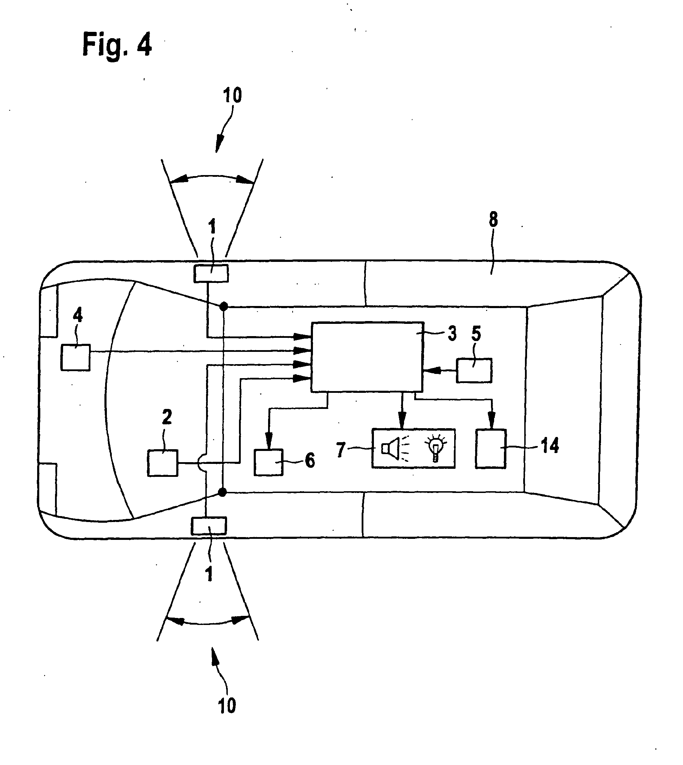

Alternativ oder ergänzend zu den beschriebenen optischen Möglichkeiten, einen Hinweis auf die Öffnungsmöglichkeiten einer Türe zu geben, ist es vorteilhaft, wenn eine Sicherheitseinrichtung 14 (siehe Fig. 4) vorgesehen ist, die das Öffnen der Türe in Anbetracht der konkreten Einparkposition und der daraus resultierenden Abstände der einzelnen Türen zu ihren jeweils benachbarten Hindernissen automatisch kontrolliert. Eine derartige Sicherheitseinrichtung 11 ist vorzugsweise ausgebildet, den Öffnungswinkel einer Türe automatisch zu begrenzen oder eine Türe des Kraftfahrzeugs 8 gänzlich zu sperren, je nach Maßgabe durch die von der Rechnereinheit 3 berechnete Gefahr einer Kollision der jeweiligen Türe mit dem Hindernis 9 in ihrer Nachbarschaft. Eine solche Sicherheitseinrichtung vermeidet eine Kollision und damit auch eventuelle Beschädigungen von sowohl der Türe selbst wie auch von dem Hindernis beim Öffnen der Türe selbst dann, wenn ein oben beschriebener optischer Warnhinweis von dem Fahrer oder den Fahrgästen des Fahrzeugs 8 ignoriert werden sollte.

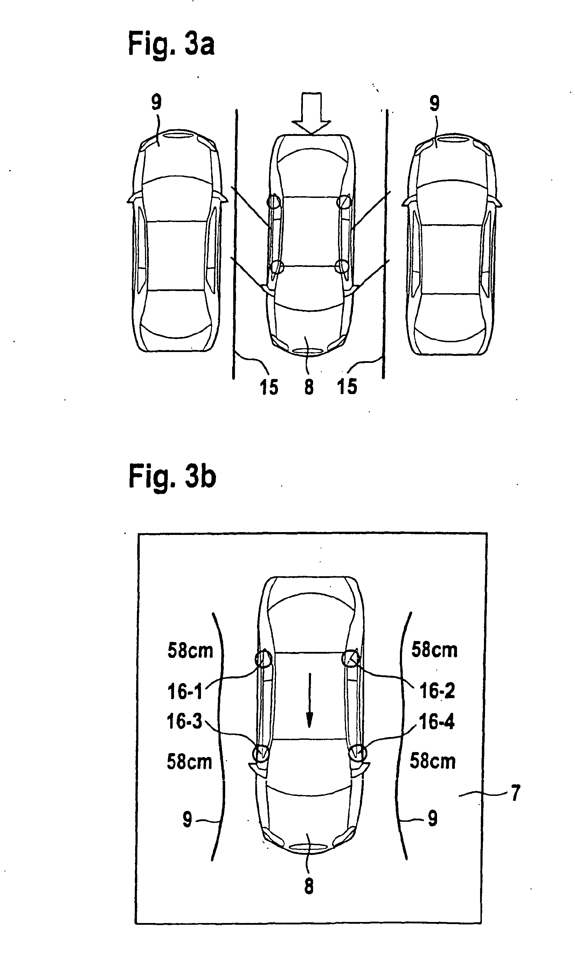

Fig. 3a zeigt eine zweite Einparkposition des Kraftfahrzeugs 8. Im Unterschied zu der in Fig. 2a gezeigten ersten Einparkposition steht das Fahrzeug 8 nun ideal mittig in der Parklücke. Zu den beiden in den benachbarten Parklücken parkenden Fahrzeugen 9 besteht ein gleicher und für eine Öffnung aller vier Türen ausreichender Abstand. Eine derartige ideale zweite Einparkposition kann sich beispielsweise durch geeignetes Korrigieren aus der ersten Einparkposition ergeben, vorteilhafterweise wenn der Fahrer des Fahrzeugs 8 die in Fig. 2b gegebenen Informationen zur Korrektur seiner Einparkposition verwendet.

Die in Fig. 3a gezeigte reale zweite Einparkposition wird dem Fahrer des Fahrzeugs 8, vorzugsweise wie in Fig. 3b auf dem optischen Display 7, veranschaulicht. Es ist zu erkennen, dass der seitliche Abstand des Fahrzeugs 8 zu den benachbart parkenden Fahrzeugen einheitlich 58 cm beträgt. Weiterhin zeigt das Display dem Fahrer in Form der punktförmigen Symbole 16-1 bis 16-4 an, dass alle vier Türen des Fahrzeugs in Anbetracht des ausreichenden seitlichen Abstandes gefahrlos geöffnet werden können. Die Sicherheitseinrichtung 14 (siehe Fig. 4) würde in diesem Fall alle vier Türen zum Öffnen freigeben.

In Fig. 4 ist schematisch in einer Draufsicht ein Ausführungsbeispiel für eine Vorrichtung zur Überwachung des Nahbereichs eines Kraftfahrzeuges wiedergegeben. Die Vorrichtung weist hier im seitlichen vorderen Bereich jeweils einen Entfernungssensor 1 auf jeder Seite des Fahrzeugs 8 auf. Die Sensoren 1 können beispielsweise Radar-, Ultraschall- oder Infrarotsensoren sein. Die Sensorwerte der Entfernungssensoren 1 werden einer zentralen Rechnereinheit 3 zugeführt. Weiterhin sind ein Wegsensor 4 sowie ein Lenkwinkelsensor 2 vorgesehen, deren Sensorwerte ebenfalls der Rechnereinheit 3 zugeführt werden. Der Wegsensor 4 dient der Erfassung einer zurückgelegten Wegstrecke des Fahrzeuges und ist beispielsweise mit einem Tachometer des Kraftfahrzeuges 8 gekoppelt. Der Lenkwinkelsensor 2 dient der Erfassung einer eingeschlagenen Lenkrichtung des Kraftfahrzeuges 8 zur Berechnung einer Trajektorie bzw. einer eingeschlagenen Fahrbahnstrecke des Kraftfahrzeuges 8. Die Rechnereinheit 3 ist angepasst zur Verarbeitung der Sensorwerte der Entfernungssensoren 1, des Lenkwinkelsensors 2 sowie des Wegsensors 4. Weiter ist eine Speichereinheit 5 vorgesehen, in welcher u.a. Informationen hinsichtlich der Karosserie des Kraftfahrzeuges 8 gespeichert sind. Karosseriebezogene Informationen sind beispielsweise die Fahrzeuglänge, -breite, der Radabstand, der Achsabstand, der vordere und hinter Überhang (Abstand Radachse zu Fahrzeugende) oder dergleichen. Auf der Basis der erfassten Sensorwerte durch die Sensoren 1, 2, 4 und der gespeicherten fahrzeugspezifischen Informationen in der Speichereinheit 5 kann in der Rechnereinheit 3 ein Abstand zu einem seitlichen Hindernis (nicht dargestellt) beim Vorbeifahren des Fahrzeuges 8 fortlaufend überwacht und kontrolliert werden.

Gemäß einem vorteilhaften Aspekt kann ein einmal durch einen der Sensoren 1 erfasster Gegenstand fortlaufend und in Echtzeit durch Berechnungen überwacht werden, auch wenn dieser den Detektionsbereich 10 der Entfernungssensoren 1 bereits verlassen hat. Die letzte Position eines erfassten Hindernisses wird in der Rechnereinheit 3 zwischengespeichert, und auf dieser Grundlage unter Berechnung einer Trajektorie bzw. Fahrbahn auf Basis der Weg-, Lenkwinkel- und Karosserieinformationen kann hierdurch die Überwachung des gesamten Seitenbereichs des Kraftfahrzeuges 8 bei geringem konstruktivem Aufwand der Vorrichtung realisiert werden. Über eine Warneinrichtung 7 können bei Vorliegen einer Kollisionsgefahr dem Fahrer Warnsignale gegeben werden, beispielsweise akustische oder grafische Signale. Alternativ oder ergänzend hierzu kann auf das Fahrverhalten des Kraftfahrzeuges 8 Einfluss genommen werden, zum Beispiel durch eine Einrichtung, die ein Abbremsen des Fahrzeuges oder ein Verändern der Lenkrichtung automatisch vornimmt.

Selbstverständlich ist die vorliegende Erfindung nicht auf das dargestellte Ausführungsbeispiel beschränkt und kann insbesondere eine unterschiedliche Anzahl von seitlichen Entfernungssensoren 1 aufweisen, zum Beispiel auf jeder Seite zwei, drei oder vier gleichmäßig oder ungleichmäßig verteilte Sensoren. Die Sensorbereiche bzw. kegel können im wesentlichen rechtwinklig zur Längsachse des Kfz ausgerichtet sein oder leicht schräg zu dieser. Weiter kann die erfindungsgemäße Kollisionsvermeidungs-Vorrichtung als Programmeinheit in bestehende Fahrzeugsysteme implementiert werden, zum Beispiel ein konventionelles Einparkhilfe-System und eine elektronische Fahrzeugsteuerung. Weiter kann das erfindungsgemäße Kollisionsüberwachungssystem als Teil einer verbesserten Einparkhilfe in einem Fahrzeug implementiert werden oder separat als eigene Vorrichtung.

Sämtliche in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Vorrichtung zur Überwachung des Nahbereichs eines Kraftfahrzeugs (8) zur Vermeidung von Kollisionen mit Hindernissen (9), mit mindestens einem im Bereich einer Seitenflanke des Kraftfahrzeugs (8) zur Überwachung von seitlichen Hindernissen vorgesehenen Entfernungssensor (1), mit einem Lenkwinkelsensor (2) und einem Wegsensor (4) zur Erfassung einer zurückgelegten Wegstrecke und mit einer Rechnereinheit (3) zur Verarbeitung von erfassten Sensorwerten und weiterer Informationen, wobei eine Warneinrichtung (7) vorgesehen ist, mittels welcher ein akustisches und/oder optisches Warnsignal bei Vorliegen einer Kollisionsgefahr erzeugt wird,
**dadurch gekennzeichnet, dass** die Warneinrichtung (7) ausgebildet ist anzuzeigen, welche der Türen des Kraftfahrzeugs (8) in Anbetracht einer zu geringen Entfernung der Türen zu dem Hindernis (9) im seitlichen Bereich des Kraftfahrzeugs (8) nicht geöffnet werden dürfen und/oder welche der Türen des Kraftfahrzeugs (8) in Anbetracht einer ausreichenden Entfernung zu dem seitlichen Hindernis (9) wieweit geöffnet werden dürfen.

2. Vorrichtung nach Anspruch 1, **dadurch gekennzeichnet, dass** eine Speichereinheit zur Speicherung von Positionsdaten eines im Nahbereich des Kraftfahrzeugs (8) erfassten Hindernisses (9) vorgesehen ist, auch nachdem das Hindernis (9) außerhalb eines Detektionsbereichs (10) des mindestens einen Entfernungssensors (1) ist.

3. Vorrichtung nach Anspruch 1 oder 2, **dadurch gekennzeichnet, dass** die Rechnereinheit (3) angepasst ist zur fortlaufenden Ermittlung von einer Kollisionsgefahr auf der Basis von Entfernungs-, Lenkwinkel- und Weginformationen.

4. Vorrichtung nach Anspruch 3, **dadurch gekennzeichnet, dass** die Rechnereinheit (3) ausgebildet ist, eine aktuelle Position des Kraftfahrzeugs (8) in Bezug auf das mindestens eine Hindernis (9), insbesondere im Seitenbereich des Kraftfahrzeugs (8), vorzugsweise in Echtzeit zu ermitteln.

5. Vorrichtung nach Anspruch 4, **dadurch gekennzeichnet, dass** die Rechnereinheit (3) ausgebildet ist, zu ermitteln, inwieweit mindestens eine Türe des Kraftfahrzeugs (8) unter Berücksichtigung der Position des Kraftfahrzeugs (8) zu einem der Türe benachbarten Hindernis (9) im Seitenbereich des Kraftfahrzeugs geöffnet werden kann, ohne dass es zu einer Kollision der Türe mit dem Hindernis kommt.

6. Vorrichtung nach Anspruch 5, **dadurch gekennzeichnet, dass** eine Sicherheitseinrichtung (14) vorgesehen ist, zum Begrenzen des Öffnungswinkels oder zum Sperren der Türe des Kraftfahrzeugs (8) nach Maßgabe durch die von der Rechnereinheit (3) berechnete Gefahr einer Kollision der Türe mit dem Hindernis (9) in ihrer Nachbarschaft.

7. Vorrichtung nach einem der vorhergehenden Ansprüche,
**dadurch gekennzeichnet, dass** ein Aktuator (6) vorgesehen ist zur automatischen Veränderung eines Lenkeinschlags oder zum automatischen Abbremsen des Kraftfahrzeugs (8) bei Erfassen eines Hindernisses (9), mit welchem eine Kollision droht.

8. Vorrichtung nach einem der vorhergehenden Ansprüche,
**dadurch gekennzeichnet, dass** der mindestens eine Entfernungssensor (1) im vorderen und/oder im hinteren Seitenbereich des Kraftfahrzeugs (8) vorgesehen ist.

9. Vorrichtung nach einem der vorhergehenden Ansprüche,
**dadurch gekennzeichnet, dass** gespeicherte Informationen
hinsichtlich der Außenkontur und/oder weiterer Charakteristika des Kraftfahrzeugs (8) in der Rechnereinheit (3) vorgesehen sind.

10. Vorrichtung nach Anspruch 6, **dadurch gekennzeichnet, dass** die Informationen in einer fahrzeugseitigen und/oder einer anhängerseitigen Rechner- und/oder Speichereinheit abgelegt sind.

11. Vorrichtung nach einem der vorhergehenden Ansprüche,
**dadurch gekennzeichnet, dass** die Rechnereinheit (3) angepasst ist zur Berechnung einer Trajektorie des Kraftfahrzeugs (8) in Abhängigkeit der erfassten Lenkwinkel- und weiterer karosseriebezogener Informationen.

12. Vorrichtung nach wenigstens einem der vorhergehenden Ansprüche, **dadurch gekennzeichnet, dass** die Warneinrichtung (7) als optisches Display ausgebildet ist, zum Anzeigen einer Position, insbesondere einer Einparkposition des Kraftfahrzeugs (8) in Bezug auf das mindestens eine Hindernis (9) im seitlichen Bereich des Kraftfahrzeugs (8).

13. Vorrichtung nach wenigstens einem der vorhergehenden Ansprüche, **dadurch gekennzeichnet, dass** das optische Warnsignal bei Vorliegen einer Kollisionsgefahr in Form unterschiedlicher Symbole (16-1 ... 16-4) ausgebildet ist.

14. Vorrichtung nach einem der vorhergehenden Ansprüche,
**dadurch gekennzeichnet, dass** die Warneinrichtung (7) eine zumindest einzelnen Türen individuell zugeordnete Leuchtanzeige, vorzugsweise ein Blinklicht, aufweist, welche ausgebildet ist, Licht in unterschiedlichen Farben auszusenden, um auf diese Weise anzuzeigen, in wieweit bzw. mit welchem Grad an Aufmerksamkeit die jeweilige Türe in Anbetracht der Kollisionsgefahr mit dem Hindernis geöffnet werden darf.

15. Vorrichtung nach einem der vorhergehenden Ansprüche, **dadurch gekennzeichnet, dass** ein weiterer Entfernungssensor im vorderen und/oder hinteren seitlichen Bereich des Kraftfahrzeugs (8) vorgesehen ist.

## Claims

1. Apparatus for monitoring the vicinity of a motor vehicle (8) in order to avoid collisions with obstacles (9), having at least one distance sensor (1) which is provided in the region of a side part of the motor vehicle (8) for monitoring lateral obstacles, having a steering angle sensor (2) and a travel sensor (4) for sensing a distance travelled, and having a computer unit (3) for processing acquired sensor values and further information, wherein a warning device (7) is provided by means of which an acoustic and/or optical warning signal is generated when there is a risk of a collision,
**characterized in that** the warning device (7) is designed to indicate which of the doors of the motor vehicle (8) must not be opened in view of an excessively small distance of the doors from the obstacle (9) in the lateral region of the motor vehicle (8) and/or how far which of the doors of the motor vehicle (8) may be opened in view of a sufficient distance from the lateral obstacle (9).

2. Apparatus according to Claim 1, **characterized in that** a memory unit is provided for storing position data of an obstacle (9) which is sensed in the vicinity of the motor vehicle (8), even after the obstacle (9) is outside a detention range (10) of the at least one distance sensor (1).

3. Apparatus according to Claim 1 or 2, **characterized in that** the computer unit (3) is adapted for continuously determining a risk of a collision on the basis of distance information, steering angle information and travel information.

4. Apparatus according to Claim 3, **characterized in that** the computer unit (3) is designed to determine, preferably in real time, a current position of the motor vehicle (8) with respect to the at least one obstacle (9), in particular in the lateral region of the motor vehicle (8).

5. Apparatus according to Claim 4, **characterized in that** the computer unit (3) is designed to determine how far at least one door of the motor vehicle (8) can be opened taking into account the position of the motor vehicle (8) with respect to an obstacle (9) which is adjacent to the door, in the lateral region of the motor vehicle, without a collision of the door with the obstacle occurring.

6. Apparatus according to Claim 5, **characterized in that** a safety device (14) is provided for limiting the angle of aperture or for locking the door of the motor vehicle (8) in accordance with the risk of a collision of the door with the obstacle (9) in its vicinity, which is calculated by the computer unit (3).

7. Apparatus according to one of the preceding claims, **characterized in that** an actuator (6) is provided for automatically changing a steering lock or for automatically braking the motor vehicle (8) when an obstacle (9) with which there is a risk of a collision is sensed.

8. Apparatus according to one of the preceding claims, **characterized in that** the at least one distance sensor (1) is provided in the front and/or in the rear lateral region of the motor vehicle (8).

9. Apparatus according to one of the preceding claims, **characterized in that** stored information relating to the external contour and/or further characteristics or the motor vehicle (8) is provided in the computer unit (3).

10. Apparatus according to Claim 6, **characterized in that** the information is stored in a vehicle-side and/or trailer-side computer unit and/or memory unit.

11. Apparatus according to one of the preceding claims, **characterized in that** the computer unit (3) is adapted to calculating a trajectory of the motor vehicle (8) as a function of the acquired steering angle information and further information relating to the vehicle bodywork.

12. Apparatus according to at least one of the preceding claims, **characterized in that** the warning device (7) is embodied as an optical display for displaying a position, in particular a parked position of the motor vehicle (8) with respect to the at least one obstacle (9) in the lateral region of the motor vehicle (8).

13. Apparatus according to at least one of the preceding claims, **characterised in that** the optical warning signal when there is a risk of a collision is embodied in the form of different symbols (16-1 ... 16-4).

14. Apparatus according to one of the preceding claims, **characterized in that** the warning device (7) has a light display, preferably a flashing light, which is individually assigned to at least individual doors and which is designed to emit light in different colours in order to in this way display how far and/or with what degree of attentiveness the respective door may be opened in view of the risk of collision with the obstacle.

15. Apparatus according to one of the preceding claims, **characterised in that** a further distance sensor is provided in the front and/or rear lateral region of the motor vehicle (8) .

## Revendications

1. Appareil pour contrôler la proximité d'un véhicule automobile (8) pour éviter des collisions avec des obstacles (9), avec au moins un capteur de distance (1) prévu dans la zone d'un flanc latéral du véhicule automobile (8) pour contrôler les obstacles latéraux, avec un capteur d'angle de direction (2) et un capteur de trajectoire (4) pour déterminer un tronçon de trajectoire en marche arrière et avec une unité de calcul (3) pour traiter les valeurs détectées par le capteur et d'autres informations, un appareil d'avertissement (7) étant prévu à l'aide duquel un signal d'avertissement acoustique et/ou optique est produit en présence d'un risque de collision, **caractérisé en ce que** l'appareil d'avertissement (7) est réalise pour indiquer lesquelles des portes du véhicule automobile (8) ne doivent pas être ouvertes du fait d'une distance trop limitée des portes par rapport à l'obstacle (9) situé dans la zone latérale du véhicule automobile (8) et/ou dans quelle mesure quelles portes du véhicule automobile (8) peuvent être ouvertes en tenant compte d'un éloignement suffisant par rapport à l'obstacle (9) latéral.

2. Appareil selon la revendication 1, **caractérisé en ce qu'**une unité de mémorisation est prévue pour mémoriser des données de position d'un obstacle (9) détecté à proximité du véhicule automobile (8), également après que l'obstacle (9) se trouve en dehors d'une zone de détection (10) de l'au moins un capteur de distance (1).

3. Appareil selon la revendication 1 ou 2, **caractérisé en ce que** calcul (3) est adaptée à la détermination en continu d'un risque de collision sur la base des informations d'éloignement, d'angle de direction et de trajectoire.

4. Appareil selon la revendication 3, **caractérisé en ce que** l'unité de calcul (3) est réalisée pour calculer une position actuelle du véhicule automobile (8) par rapport à l'au moins un obstacle (9), notamment dans la zone latérale du véhicule automobile (8), de préférence en temps réel.

5. Appareil selon la revendication 4, **caractérisé en ce que** l'unité de calcul (3) est réalisée pour calculer dans quelle mesure au moins une porte du véhicule automobile (8) peut être ouverte en tenant compte de la position du véhicule automobile (8) par rapport à un obstacle (9) connexe à la porte dans la zone latérale du véhicule automobile, sans provoquer de collision de la porte avec l'obstacle.

6. Appareil selon la revendication 5, **caractérisé en ce qu'**un dispositif de sécurité (14) est prévu, pour limiter l'angle d'ouverture ou pour bloquer la porte du véhicule automobile (8) au prorata du risque, calculé par l'unité de calcul (3), de collision de la porte avec l'obstacle (9) situé à proximité.

7. Appareil selon l'une quelconque des revendications précédentes, **caractérisé en ce qu'**un actionneur (6) est prévu pour modifier automatiquement un angle de braquage ou pour faire freiner automatiquement le véhicule automobile (8) en cas de détection d'un obstacle (9) pouvant provoquer une collision.

8. Appareil selon l'une quelconque des revendications précédentes, **caractérisé en ce que** l'au moins un capteur de distance (1) est prévu dans la zone latérale avant et/ou arrière du véhicule automobile (8).

9. Appareil selon l'une quelconque des revendications précédentes, **caractérisé en ce que** les informations mémorisées par rapport au contour extérieur et/ou d'autres caractéristiques du véhicule automobile (8) sont disposées au préalable dans l'unité de calcul (3).

10. Appareil selon la revendication 6, **caractérisé en ce que** les informations sont stockées dans une unité de calcul et/ou de mémorisation placée du côté du véhicule et/ou du côté de la remorque.

11. Appareil selon l'une quelconque des revendications précédentes, **caractérisé en ce que** l'unité de calcul (3) est adaptée pour calculer une trajectoire du véhicule automobile (8) en fonction de l'angle de direction détecté et d'autres informations liées à la carrosserie.

12. Appareil selon au moins l'une quelconque des revendications précédentes, **caractérisé en ce que** l'appareil d'avertissement (7) prend la forme d'un affichage optique, pour afficher une position, notamment une position de stationnement du véhicule automobile (8) par rapport à au moins un obstacle (9) situé dans la zone latérale du véhicule automobile (8).

13. Appareil selon au moins l'une quelconque des revendications précédentes, **caractérisé en ce que** le signal d'avertissement optique prend la forme de différents symboles (16-1 ... 16-4) en présence d'un risque de collision.

14. Appareil selon l'une quelconque des revendications précédentes, **caractérisé en ce que** l'appareil d'avertissement (7) comporte un affichage lumineux associé de façon individuelle au moins aux différentes portes, de préférence une lumière clignotante qui est conçue pour émettre de la lumière de différentes couleurs pour indiquer de cette façon l'ampleur et/ou le degré d'attention avec lequel la porte respective doit être ouverte par rapport au risque de collision avec l'obstacle.

15. Appareil selon l'une quelconque des revendications précédentes, **caractérisé en ce qu'**un autre capteur de distance est prévu dans la zone latérale avant et/ou arrière du véhicule automobile (8).
